# FASCICULE DE BREVET EUROPEEN

(11) **EP 2 991 453 B1**
(45) Date de publication et mention de la délivrance du brevet: **04.05.2022**
(21) Numéro de dépôt: 15182444.8
(22) Date de dépôt: 26.08.2015
(51) Int. Cl.: H05B 45/10, H05B 45/44, H05B 45/397, H05B 45/12, H05B 45/18

(54) **DISPOSITIF D'ÉCLAIRAGE À LED**
LED-BELEUCHTUNGSVORRICHTUNG
LED LIGHTING DEVICE

(30) Priorité: 26.08.2014 FR 1458000
(43) Date de publication de la demande: 02.03.2016
(73) Titulaire: COMMISSARIAT À L'ÉNERGIE ATOMIQUE ET AUX ÉNERGIES ALTERNATIVES, 75015 Paris (FR)
(72) Inventeur: DESPESSE, Ghislain, 38340 VOREPPE (FR)
(74) Mandataire: Novaimo

(56) Documents cités:
- EP-A2- 2 624 662
- EP-A2- 2 624 662
- WO-A1-2010/013172
- DE-A1-102007 006 438
- US-A1- 2011 037 082
- US-A1- 2012 256 550
- US-A1- 2013 207 548

## Description

L'invention concerne un dispositif d'éclairage et/ou d'affichage à diode électroluminescente. Elle concerne aussi un procédé de gestion d'un tel dispositif.

L'éclairage à diodes électroluminescentes (LED) devient de plus en plus courant. Pour obtenir un niveau d'éclairage satisfaisant, un dispositif d'éclairage à LED de l'état de la technique repose sur un grand nombre de LED élémentaires. Un tel dispositif nécessite une alimentation électrique particulière, qui veille à ne pas dépasser le courant maximal admissible par chaque LED. Pour cela, il existe aujourd'hui des circuits qui permettent d'assurer cette alimentation, par exemple par une alimentation à découpage, à partir d'une source de tension continue et relativement basse (<24 ou 48V). La connexion d'un tel dispositif d'éclairage à une source d'alimentation de type réseau électrique alternatif conventionnel n'est pas immédiate, car la tension crête d'une telle source dépasse la tension admissible par chaque LED.

Pour répondre aux contraintes mentionnées ci-dessus, le document US20100134018 A1 décrit une solution dans laquelle il est possible de mettre en série un nombre de LED plus ou moins important, pour que chaque LED reçoive à ses bornes une tension optimale pour son fonctionnement. Ce dispositif présente toutefois l'inconvénient que chaque LED reste shuntée un temps important, ce qui réduit l'efficacité de l'éclairage.

Le document EP2624662 A2 divulgue un dispositif d'éclairage qui comprend plusieurs modules élémentaires de sorte à pouvoir être disposés en série.

Les documents US 2012156550 A1, US2013207548 A1 et WO2010013172 A1 décrivent d'autres dispositifs d'éclairage de l'état de la technique.

Ainsi, il existe un besoin d'une solution améliorée de dispositif d'éclairage ou d'affichage à base de composants d'éclairage élémentaires basse tension, comme des LED.

A cet effet, l'invention repose sur un dispositif tel que défini dans la revendication 1.

Les composants d'éclairage élémentaires sont des diodes électroluminescentes, notamment LED et/ou OLED et/ou PLED, et/ou PHLED.

Chaque module élémentaire peut comprendre au moins un capteur de mesure d'une grandeur caractéristique de l'état du module élémentaire considéré, comme le courant, l'intensité lumineuse générée, la tension, la température, et le circuit de commande du module élémentaire considéré est adapté pour commander les interrupteurs internes respectifs en fonction de la grandeur caractéristique mesurée.

Le dispositif d'éclairage peut comprendre un circuit pour la transmission d'une consigne de courant à chaque module élémentaire.

Pour chaque module élémentaire, le circuit de commande respectif peut comprendre un comparateur et une porte inverseuse.

Au moins un module élémentaire peut comprendre au moins un composant de stockage qui permet de restituer de l'énergie à au moins un des au moins deux composants d'éclairage élémentaires quand la tension d'alimentation du dispositif est insuffisante pour son éclairage.

Le dispositif peut comprendre un pont redresseur ou plusieurs ponts redresseurs associés chacun à un desdits plusieurs sous-ensembles pour redresser la tension d'alimentation du dispositif, et/ou peut comprendre un pont en H ou plusieurs ponts en H permettant de shunter au moins un module élémentaire en cas de tension d'alimentation du dispositif insuffisante.

Le dispositif peut comprendre un ASIC pour chaque module élémentaire.

Lesdits interrupteurs internes et lesdits interrupteurs supplémentaires peuvent être aptes à occuper une position semi-ouverte pour remplir une fonction de régulateur/limiteur de courant.

Les interrupteurs internes et les interrupteurs supplémentaires peuvent être des interrupteurs commandés, comme des transistors bipolaires ou des transistors MOS.

L'invention porte aussi sur un procédé tel que défini dans la revendication 10.

Le procédé peut comprendre une étape de régulation par hystérésis de la configuration des interrupteurs du dispositif.

Ces objets, caractéristiques et avantages de la présente invention seront exposés en détail dans la description suivante de modes de réalisation particuliers faits à titre non-limitatif en relation avec les figures jointes parmi lesquelles :
La figure 1 représente schématiquement la structure d'un module d'un dispositif d'éclairage ou d'affichage selon un mode de réalisation de l'invention.
La figure 2 représente schématiquement l'évolution du courant aux bornes du module du dispositif d'éclairage ou d'affichage en fonction de son mode de fonctionnement selon un mode de réalisation de l'invention.
La figure 3 représente un premier circuit permettant la mise en œuvre de l'évolution du courant selon la figure 2 selon un mode de réalisation de l'invention.
La figure 4 représente un second circuit permettant la mise en œuvre de l'évolution du courant selon la figure 2 selon un mode de réalisation de l'invention.
La figure 5 représente un troisième circuit permettant la mise en œuvre de l'évolution du courant selon la figure 2 selon un mode de réalisation de l'invention.
La figure 6 représente schématiquement la structure d'un sous-ensemble de deux modules d'un dispositif d'éclairage ou d'affichage.
La figure 7 représente schématiquement la structure d'un sous-ensemble de quatre modules d'un dispositif d'éclairage ou d'affichage selon un mode de réalisation de l'invention.
Les figures 8 et 9 représentent schématiquement des dispositifs d'éclairage ou d'affichage selon des modes de réalisation de l'invention.
La figure 10 représente schématiquement un dispositif d'éclairage ou d'affichage.
Les figures 11 et 12 représentent schématiquement des connexions au secteur de dispositifs d'éclairage ou d'affichage.
La figure 13 représente la structure d'un module d'un dispositif d'éclairage ou d'affichage avec un circuit de commande de ses interrupteurs selon un mode de réalisation de l'invention.
La figure 14 représente la structure d'un sous-ensemble de deux modules d'un dispositif d'éclairage ou d'affichage avec un circuit de commande de ses interrupteurs.
Les figures 15a à 15c représentent des comparateurs du circuit de commande d'interrupteurs d'un dispositif d'éclairage ou d'affichage selon un mode de réalisation de l'invention.
La figure 16 représente schématiquement des connexions au secteur de dispositifs d'éclairage ou d'affichage avec un circuit de transmission d'un courant de consigne.
La figure 17 représente schématiquement des connexions au secteur de dispositifs d'éclairage ou d'affichage avec un circuit de transmission d'un courant de consigne selon un mode de réalisation de l'invention.
La figure 18 représente schématiquement des connexions au secteur de dispositifs d'éclairage ou d'affichage avec un circuit de transmission d'un courant de consigne.
La figure 19 représente la structure d'un module d'un dispositif d'éclairage ou d'affichage avec un circuit de commande de ses interrupteurs par intensité lumineuse selon un mode de réalisation de l'invention.
La figure 20 représente l'intensité lumineuse en fonction du temps fournie par plusieurs dispositifs d'éclairage ou d'affichage à partir d'une alimentation alternative redressée selon des modes de réalisation de l'invention.
La figure 21 représente schématiquement la structure d'un module d'un dispositif d'éclairage ou d'affichage selon un mode de réalisation de l'invention.
La figure 22 représente schématiquement la structure d'un sous-ensemble de deux modules d'un dispositif d'éclairage ou d'affichage.
La figure 23 représente schématiquement la structure d'une solution pour l'alimentation électrique d'un dispositif d'éclairage ou d'affichage selon un mode de réalisation de l'invention.
La figure 24 représente schématiquement la structure d'un sous-ensemble de deux modules d'un dispositif d'éclairage ou d'affichage selon un mode de réalisation de l'invention.
La figure 25 représente schématiquement la structure d'un dispositif d'éclairage ou d'affichage selon un mode de réalisation de l'invention.

Dans les figures suivantes, les mêmes références seront utilisées pour des éléments identiques ou similaires dans chaque mode de réalisation de l'invention, pour une raison de simplification de la description. Par convention, nous utiliserons les qualificatifs « supérieur » et « inférieur » pour désigner les éléments du dispositif dans la direction de leur assemblage en série.

Dans les modes de réalisation de l'invention, un dispositif d'éclairage ou d'affichage à LED est agencé avec une structure composée de modules élémentaires disposés en série, et dotés d'interrupteurs permettant de modifier l'agencement entre les LED à l'intérieur de chaque module, permettant notamment modifier le nombre de LED disposées en série ou en parallèle.

L'avantage d'une telle architecture provient du fait que chaque module élémentaire présente une différence de potentiel entre ses bornes supérieure et inférieure, qui peut être choisie à toute valeur avantageuse, plus faible que la tension d'alimentation globale, ce qui permet de simplifier les composants utilisés, tout en simplifiant leur commande, comme cela va être illustré.

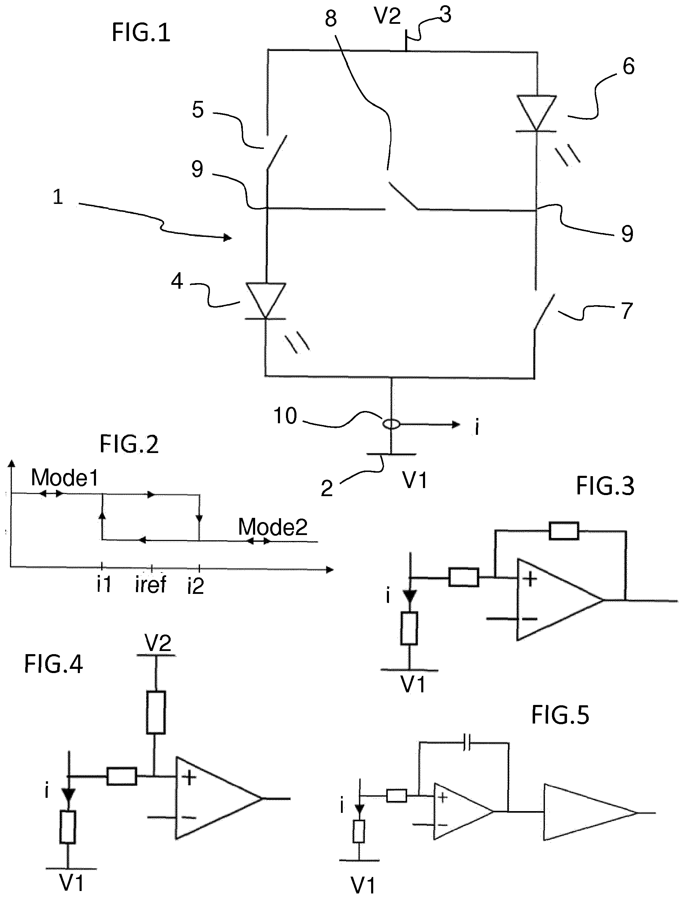

A titre d'exemple, la figure 1 représente un module 1 élémentaire selon un mode de réalisation de l'invention. Ce module 1 comprend une première borne, que nous appellerons par convention borne inférieure 2, qui est destinée à une liaison électrique avec un module voisin inférieur, et une seconde borne que nous appellerons par convention borne supérieure 3, destinée à une liaison série avec un module voisin supérieur. Entre ces deux bornes 2, 3, de potentiels respectifs V1 et V2, le module 1 comprend deux branches parallèles, sur lesquelles sont respectivement disposés dans l'ordre suivant de bas en haut : une LED 4 et un interrupteur 5 disposés en série sur la première branche, et un interrupteur 7 et une LED 6 disposés en série sur la seconde branche parallèle. De plus, une branche intermédiaire comprenant un troisième interrupteur intermédiaire 8 relie les deux bornes intermédiaires 9 disposées sur chacune des deux branches parallèles entre la LED 4, 6 et l'interrupteur 5, 7. Nous appellerons « interrupteurs série » ces interrupteurs 5, 7. Enfin, le module 1 est avantageusement doté d'un capteur de courant 10 qui mesure le courant i traversant le module.

L'invention porte aussi sur un procédé de gestion d'un dispositif d'éclairage ou d'affichage comprenant plusieurs modules tels que décrits ci-dessus, liés en série. Un tel procédé comprend notamment les étapes suivantes :
- Si i > iref, alors les deux premiers interrupteurs 5, 7 sont ouverts et l'interrupteur intermédiaire 8 est fermé, pour positionner les deux LED 4, 6 en série ;
- Si i < iref, alors les deux premiers interrupteurs 5, 7 sont fermés et l'interrupteur intermédiaire 8 est ouvert, pour positionner les deux LED 4, 6 en parallèle,

Où iref représente la valeur d'un courant de référence, choisi pour la régulation du fonctionnement du module. De préférence, ce courant de référence iref est fixé à la valeur du courant nominal qui permet l'éclairage des LED. Le module fonctionne ainsi selon deux configurations possibles, deux modes de fonctionnement, dits « série » et « parallèle », pour s'adapter aux variations du courant le traversant, induites par la source de courant à laquelle le dispositif d'éclairage ou d'affichage est lié.

La mise en parallèle des deux LED 4, 6 conduit à une augmentation du courant i traversant le module 1, ce qui tend alors à le ramener au-delà du courant iref, auquel cas les deux LED 4, 6 seront positionnées en série. Ce changement engendre une baisse du courant i : quand il repasse sous iref, les deux LED 4, 6 sont positionnées en parallèle. Le cycle précédent se reproduit ainsi. Pour éviter les oscillations trop fréquentes et une instabilité, notamment si le courant i se trouve proche du courant de référence iref, un circuit est associé à un tel module pour limiter ces oscillations, et provoquer par exemple un traitement de type hystérésis.

Une telle solution, illustrée par la figure 2, montre l'évolution du mode de fonctionnement du module 1 en fonction du courant iref dans le module 1. Deux valeurs de courant i1 et i2 sont fixées, réparties autour de la valeur de référence iref. Dans cette approche, un seuil de courant i2 plus haut est imposé si le module est en mode 1 parallèle, c'est-à-dire que les deux LED 4, 6 sont disposées en parallèle, et un seuil de courant i1 plus bas est imposé si le module est en mode 2 série, c'est-à-dire que les deux LED 4, 6 sont disposées en série. Un tel comportement peut être obtenu à partir d'un circuit tel que celui représenté sur la figure 3. En variante, le circuit de la figure 4 peut être utilisé, qui ajoute un décalage par rapport à la mesure du courant i, ce décalage étant d'autant plus élevé que la différence entre les potentiels V2 et V1 est élevée : cela permet d'abaisser la valeur du courant seuil au fur et à mesure que la différence de tension augmente, c'est-à-dire pendant qu'on passe en mode 2 série, et inversement quand la différence entre les potentiels V2 et V1 diminue.

Selon une autre variante, les oscillations entre les deux modes du module sont autorisées, mais à une fréquence d'oscillation limitée. Le circuit de la figure 5 permet la mise en œuvre d'une telle limitation.

Naturellement, d'autres variantes sont possibles pour empêcher les basculements trop fréquents d'un mode à l'autre, ou pour éviter le passage dans un mode de commande linéaire. Dans certains cas, un tel fonctionnement linéaire peut être recherché, par exemple lorsque la tension V2-V1 disponible entre les bornes 2, 3 du module 1 est supérieure à la tension minimale d'une LED, mais inférieure à la tension minimale de deux LED : dans un tel cas, une solution peut consister à positionner l'interrupteur intermédiaire 8 en position ouverte, et les deux autres interrupteurs 5, 7 en position semi-ouverte pour remplir une fonction de régulateur/limiteur de courant.

En effet, les deux interrupteurs 5, 7 des deux branches parallèles du module 1 peuvent remplir une fonction de limiteur de courant, pour sécuriser le fonctionnement des LED 4, 6. De tels interrupteurs peuvent être des interrupteurs commandés comme des transistors bipolaires ou des transistors MOS.

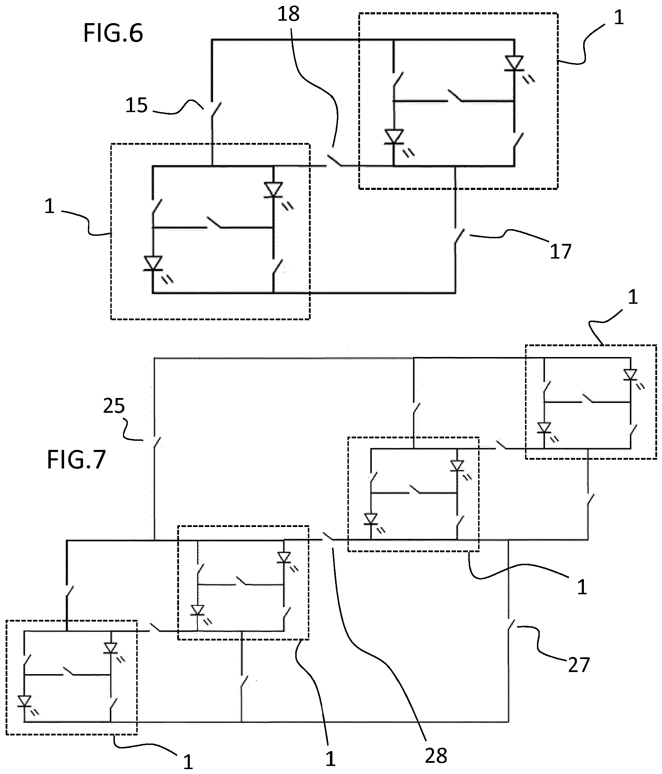

La figure 6 illustre à titre d'exemple l'association de deux modules 1 élémentaires, présentant chacun une architecture identique à celle décrite précédemment. Selon une première liaison la plus simple, non représentée, ces deux modules 1 pourraient être simplement disposés en série, par une liaison électrique entre la borne supérieure du module inférieur et la borne inférieure du module supérieur, selon un mode de réalisation qui fait partie de l'invention.

Dans ce mode de réalisation, une telle liaison série est réalisée, sur laquelle un interrupteur dit « interrupteur série » 18 a été disposé, selon une option optionnelle qui ne fait pas partie de l'invention. En complément, de manière avantageuse qui ne fait pas partie de l'invention, cette association comprend de plus une première liaison électrique supplémentaire entre les deux bornes inférieures des deux modules, sur laquelle un interrupteur inférieur dit premier interrupteur parallèle 17 est positionné, et une seconde liaison électrique supplémentaire entre les deux bornes supérieures des deux modules, sur laquelle un interrupteur supérieur dit second interrupteur parallèle 15 est positionné. Une telle liaison électrique de deux modules, à l'aide de trois liaisons et trois interrupteurs 15, 17, 18, présente l'avantage de permettre de positionner les deux modules soit en série, en fermant l'interrupteur série 18 et en ouvrant les deux interrupteurs parallèles 15, 17, soit en parallèle, en ouvrant l'interrupteur série 18 et en fermant les deux interrupteurs parallèles 15, 17.

Comme chaque module permet aussi de positionner ses deux LED soit en série, soit en parallèle, il apparait ainsi que les quatre LED de ce sous-ensemble de deux modules peuvent finalement occuper de multiples configurations différentes. Cette architecture apporte une souplesse importante pour sa gestion, qui peut permettre d'atteindre par exemple quatre valeurs de tension différentes entre la borne supérieure du module supérieur, de potentiel V2', et la borne inférieure du module inférieur, de potentiel V1, selon les exemples suivants de configuration :
- Dans une première configuration, qui ne fait pas partie de l'invention, les deux modules sont disposés en parallèle, et les deux LED de chaque module sont aussi disposées en parallèle. Cela permet finalement d'atteindre un ensemble comprenant quatre LED disposées en parallèle. En variante, certaines de ces LED peuvent être déconnectées de l'ensemble en ouvrant simplement l'interrupteur série disposé sur sa branche. Ainsi, un tel sous-ensemble peut proposer de une à quatre LED sur des branches parallèles entre ses deux bornes, supérieure et inférieur ;
- Dans une seconde configuration, les deux modules sont disposés en série et leurs LED respectives sont disposées en parallèle. En variante, un interrupteur intermédiaire d'un module et un des interrupteurs parallèles 15, 17 peuvent en outre être fermés, et non ouverts ;
- Dans une troisième configuration, trois LED peuvent être disposées en série, en choisissant une liaison série des deux modules et en déconnectant l'une des LED d'un module ou en disposant en parallèle les LED de ce module ;
- Dans une quatrième configuration, les quatre LED peuvent être liées en série.

Ce principe peut naturellement être étendu à une multitude de modules liés entre eux, comme l'association de quatre modules illustrée par la figure 7. Dans cet exemple illustré, le dispositif est construit par l'assemblage de deux sous-ensembles de deux modules présentant une architecture telle qu'illustrée sur la figure 6. Ces deux sous-ensembles sont reliés entre eux par l'intermédiaire de trois liaisons électriques et trois interrupteurs 25, 27, 28, de manière similaire à l'association entre deux modules, décrite précédemment, pour permettre de disposer ces deux sous-ensembles en série ou en parallèle.

Naturellement, cette approche permet d'imaginer un nombre très important de variantes de réalisation. En effet, chaque module élémentaire peut se présenter sous une forme différente, avec un nombre différent de LED et/ou une liaison électrique différente entre les LED. Il peut par exemple comprendre plus de deux branches parallèles, comprenant tout nombre de LED, et au moins un interrupteur série. Les différents modules élémentaires du dispositif peuvent être identiques ou non.

De plus, la liaison électrique entre les différents modules peut être plus ou moins simple. Dans tous les cas, les modules sont disposés en série et les sous-ensembles peuvent être disposés en série.

Dans tous les cas, l'assemblage présente l'avantage qu'au sein de chaque module, les composants électroniques, comme les interrupteurs, sont disposés entre deux bornes de relativement faible différence de potentiel, inférieure à la différence de potentiel globale Vh-Vb du dispositif, ce qui permet d'utiliser des composants simples et peu coûteux.

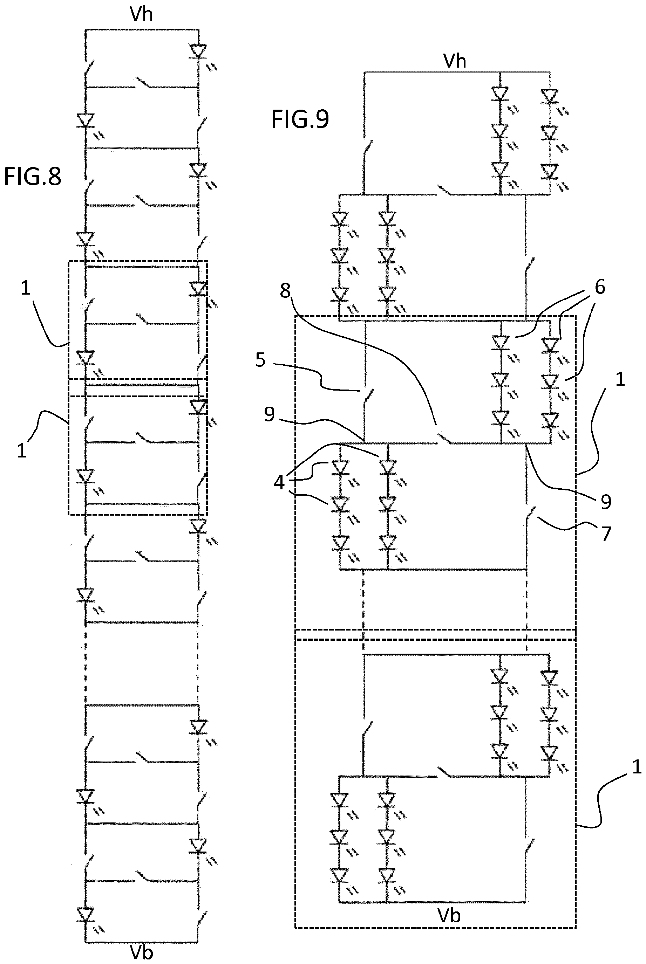

Les figures 8 à 10 illustrent ainsi trois dispositifs d'éclairage ou d'affichage à LED selon différents modes de réalisation.

La réalisation illustrée à la figure 8 consiste en un simple assemblage en série d'une multitude de modules 1 élémentaires tel que décrits en référence avec la figure 1.

La réalisation illustrée par la figure 9 consiste en un assemblage de modules 1 élémentaires différents de ceux présentés dans les réalisations précédentes. En effet, chaque module est obtenu en remplaçant chaque LED 4, 6 de chaque branche parallèle du module 1 élémentaire de la figure 1 par six LED 4, 6 disposées sur deux branches parallèles comprenant chacune trois LED, disposées entre respectivement une borne inférieure et une borne supérieure du module et les bornes intermédiaires 9 du module.

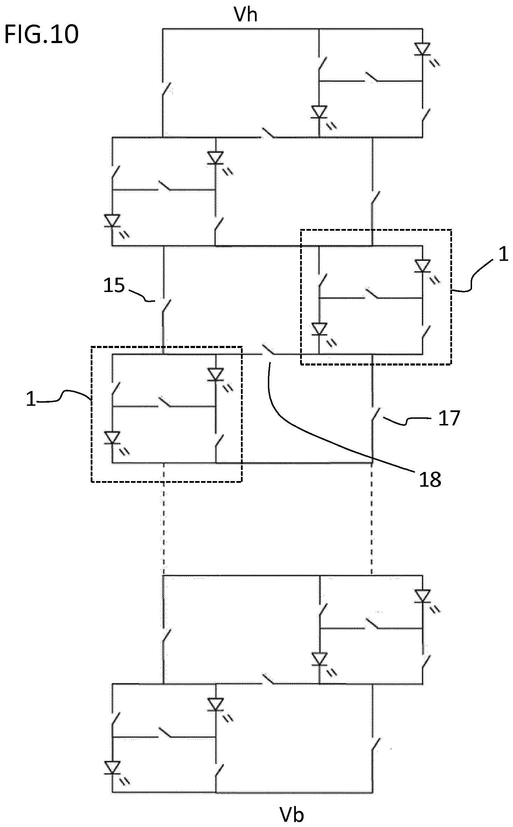

La réalisation représentée par la figure 10 illustre enfin un assemblage en série de groupes de deux modules 1 élémentaires tels qu'illustrés par la figure 6, dont la version simplifiée explicitée précédemment fait partie de l'invention.

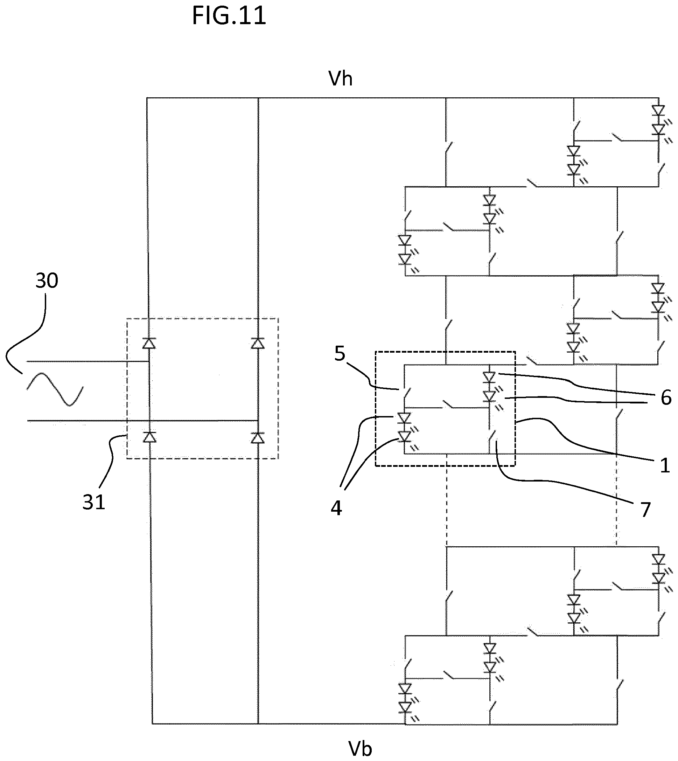

La figure 11 représente la liaison directe d'un dispositif d'éclairage ou d'affichage à LED avec une source 30 de tension alternative, comme sur le secteur conventionnel à 240 Veff. Cette liaison se fait par l'intermédiaire d'un pont redresseur 31, qui peut soit comprendre des diodes classiques supportant la tension crête fournie par la source 30, soit en utilisant des interrupteurs commandés pour limiter la chute de tension à l'état passant. En remarque, dans ce mode de réalisation, le dispositif d'éclairage ou d'affichage à LED comprend l'association en série de sous-ensembles composés de deux modules 1 élémentaires, assemblés entre eux selon l'approche explicitée en référence avec la figure 6, dont la version simplifiée explicitée précédemment fait partie de l'invention. Toutefois, dans cette réalisation, chaque module 1 élémentaire comprend deux LED 4, 6 en série sur chaque branche parallèle, et non une seule.

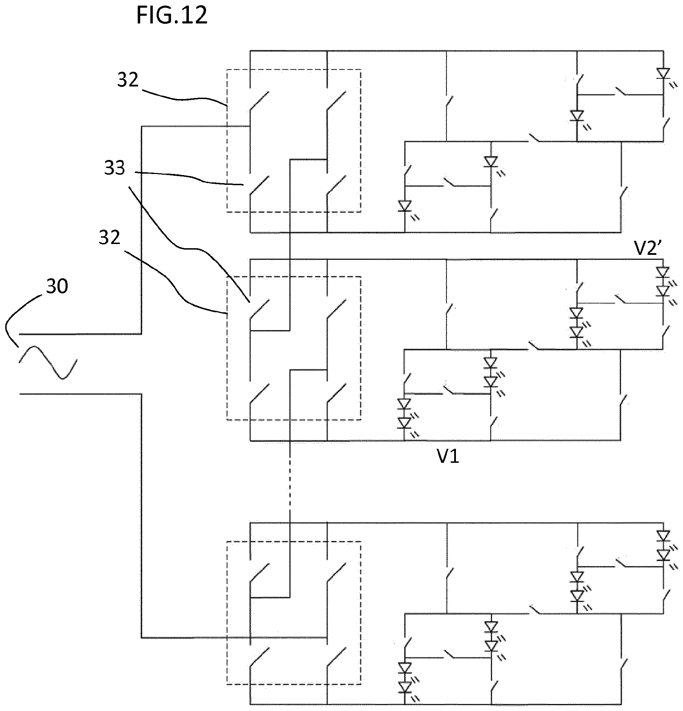

La figure 12 illustre une variante de connexion du même dispositif d'éclairage ou d'affichage à LED avec une source 30 de tension alternative, dans laquelle le pont redresseur est réparti sur chaque sous-ensemble de deux modules 1 élémentaires. La fonction de pont redresseur est ainsi remplie par une multitude de ponts redresseurs 32. L'avantage de cette approche est que chaque interrupteur 33 des ponts redresseurs 32 n'est soumis qu'à une tension réduite par rapport à ceux du pont redresseur 31 de la figure 11, plus précisément la tension V2'-V1 qui représente la tension aux bornes d'un sous-ensemble. Cette réalisation permet ainsi d'utiliser des composants plus simples et moins coûteux. Ces composants peuvent être de simples diodes ou des interrupteurs commandés. Dans le cas d'interrupteurs commandés, la position des interrupteurs (fermé ou ouvert) peut être déterminée simplement à partir du signe de la tension aux bornes du dispositif ou encore du signe du courant le traversant.

Selon une variante de réalisation, un pont en H peut être associé au dispositif d'éclairage ou d'affichage à LED, et/ou au niveau de sous-ensembles d'un tel dispositif. Un tel pont en H permet de shunter la structure sur laquelle il est monté, ce qui est utile par exemple en cas de défaillance d'une LED ou si la tension globale n'est pas suffisante pour alimenter tous les sous-ensembles du dispositif, même si ces sous-ensembles sont positionnés dans une configuration favorable, par exemple en disposant les LED de chaque module élémentaire en parallèle dans le mode de réalisation illustré.

Dans une telle situation où des ponts en H sont utilisés pour shunter un ou plusieurs sous-ensembles du dispositif d'éclairage ou d'affichage à LED, un procédé de gestion d'un tel dispositif peut comprendre une étape consistant à alterner les sous-ensembles shuntés et non shuntés, de sorte que toutes les LED du dispositif d'éclairage ou d'affichage à LED voient finalement un courant moyen sensiblement identique. L'alternance de ces shunts est avantageusement mise en œuvre à une fréquence supérieure à la pertinence rétinienne, par exemple supérieure à 50 Hz.

Selon un mode de réalisation avantageux de l'invention, les interrupteurs utilisés sont des transistors et un dispositif de commande est agencé de sorte à générer des tensions de commande de ces transistors à partir de potentiels proches des potentiels de référence de ces transistors.

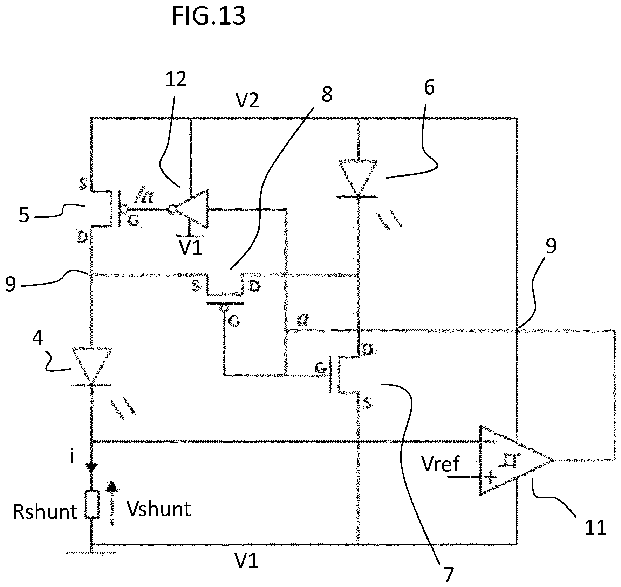

La figure 13 illustre ainsi un module 1 élémentaire selon l'architecture de la figure 1, mais en détaillant son circuit électrique permettant une commande avantageuse des interrupteurs 5, 7, et 8 qui sont de type transistors MOS (PMOS et/ou NMOS). Ce circuit est intégré au sein du module élémentaire entre les potentiels V1 et V2. Les transistors n'ont donc pas besoin de supporter une tension élevée. Avantageusement, il est choisi une tension inférieure à 50V, notamment lorsque le dispositif est lié au réseau électrique. Le circuit comprend un comparateur 11 et une porte inverseuse 12.

Le fonctionnement de ce circuit électrique va maintenant être expliqué.

Si la tension Vshunt au niveau de la première entrée du comparateur 11 est inférieure à une tension de référence Vref appliquée au comparateur, alors la sortie du comparateur 11 passe au niveau logique « 1 » et la tension de sortie au point a prend la valeur haute V2. La porte inverseuse 12 passe au niveau logique « 0 » et sa tension de sortie /a prend la valeur V1. Il en résulte que les interrupteurs série 5, 7 sont fermés et l'interrupteur intermédiaire 8 ouvert. Le module est en mode parallèle.

Si la tension Vshunt entre la première entrée du comparateur 11 et la tension basse V1 est supérieure à la tension de référence Vref appliquée au comparateur, alors la sortie du comparateur 11 passe au niveau logique « 0 » et la tension de sortie au point a prend la valeur haute V1. La porte inverseuse 12 passe au niveau logique « 1 » et sa tension de sortie /a prend la valeur V2. Il en résulte que les interrupteurs série 5, 7 sont ouverts et l'interrupteur intermédiaire 8 fermé. Le module est en mode série. En remarque, la réalisation décrite ci-dessus permet de prendre en compte une mesure électrique sur la première branche du module. En variante, cette mesure peut être globale, sur les deux branches du module, comme représenté sur la figure 1.

Une telle approche est par exemple compatible avec l'utilisation de LED de tension de fonctionnement 3V, avec un comparateur fonctionnant dans une plage de tension de l'ordre de 2 à 36V, et une porte inverseuse fonctionnant sur une plage de tension de 3 à 15V, le tout pour un dispositif connecté au réseau électrique standard.

Naturellement, des variantes de réalisation sont envisageables. Un circuit intégré comprenant tous ces composants et dédié à l'application peut être prévu. D'autres composants électriques pourraient être envisagés. Par exemple, la porte inverseuse peut être réalisée à l'aide d'un seul transistor et d'une résistance de rappel. Les interrupteurs peuvent être tout autre type de transistors comme des transistors bipolaires, FET, JFET, IGBT, CMOS, etc., à base d'un substrat silicium, de carbure de silicium, de nitrure de Gallium, d'Arséniure de Gallium, du Silicium-Germanium...

Un microcontrôleur peut être utilisé au niveau de chaque module ou sous-ensemble, c'est-à-dire un groupement de modules, pour gérer le procédé de gestion dudit sous-ensemble. Pour cela, le procédé de gestion peut comprendre les étapes suivantes :
- numérisation de la valeur du courant i ;
- calcul de la configuration des interrupteurs en fonction du courant et optionnellement en fonction de la température et/ou d'une consigne fournie par un utilisateur ;
- transmission d'une commande à un ou plusieurs interrupteurs.

Cette communication peut être mise en œuvre par le microcontrôleur par la génération de signaux en utilisant la technique MLI (Modulation de Largeur d'Interruption).

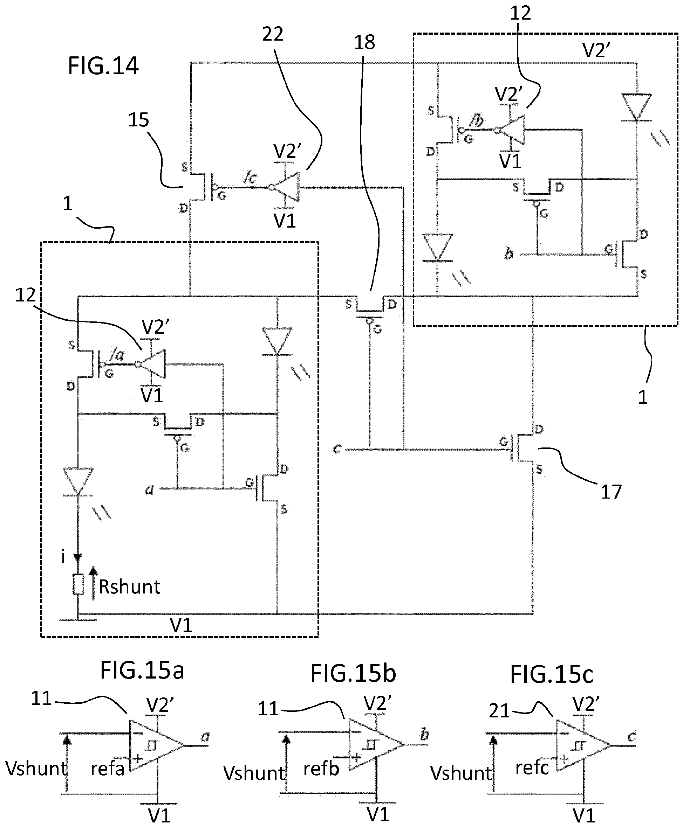

La figure 14 décrit plus en détail une architecture d'un sous-ensemble selon la figure 6, dont la version simplifiée explicitée précédemment fait partie de l'invention, incluant les circuits électriques de commande des interrupteurs, en complément de l'approche explicitée ci-dessus. Chaque module 1 élémentaire est doté d'un circuit tel que décrit ci-dessus, comprenant un comparateur 11 chacun et une porte inverseuse 12. L'assemblage comprend de plus un troisième comparateur 21 et une troisième porte inverseuse 22 pour piloter les trois interrupteurs 15, 17, 18 disposés entre les deux modules, ces trois interrupteurs ne faisant pas partie de l'invention. Les trois comparateurs 11, 21 sont représentés de manière séparée par les trois figures 15a, 15b, 15c pour ne pas alourdir la figure 14. Tous ces composants électroniques sont liés au sous-ensemble représenté pour fonctionner dans des tensions comprises entre la tension inférieure V1 du module inférieur et la tension supérieure V2' du module supérieur, donc selon une tension définie par les deux modules voisins du sous-ensemble.

Dans les réalisations décrites ci-dessus, il apparaît donc que les interrupteurs internes aux architectures décrites sont pilotés par des circuits de commande disposés au sein des modules et/ou entre les modules, pour fonctionner avec une basse tension à leurs bornes, provenant de la tension entre les bornes supérieure et inférieure d'un module ou entre deux bornes de modules voisins. Cette commande locale des interrupteurs, par un circuit alimenté localement, permet de s'affranchir du recours à une énergie extérieure au dispositif, et notamment d'éviter avantageusement le recours à une puissance externe, alimentant une commande au moins partiellement externe, par exemple centralisée, qui nécessiterait l'implémentation d'une isolation galvanique du fait de l'utilisation d'une puissance externe impliquant un potentiel de référence qui pourrait être trop différent du potentiel de référence de la commande des interrupteurs du module (par exemple, le potentiel de grille, pour un transistor de type MOSFET classique, ne peut généralement pas être éloigné de plus ou moins 20V du potentiel de source et encore moins pour des transistors en technologie plus fine). Le potentiel de référence de la puissance externe ne peut être proche du potentiel de référence de chaque module puisque deux modules éloignés présentent naturellement des potentiels de référence très diffèrent (différence facilement supérieure à 25V). Par potentiel de référence, on entend ici soit le potentiel de référence du transistor à commander (la source dans le cas d'une technologie MOSFET, l'émetteur dans le cas d'une technologie bipolaire, etc...), soit le potentiel dit de masse « GND » de l'électronique considéré, qui, dans le cas d'une alimentation par la tension du module, se trouve naturellement très proche du potentiel de référence des transistors à commander (écart inférieur à 20V), ce qui permet à cette électronique d'appliquer une commande directement sur les transistors du module sans passer par une isolation galvanique (contrôler la tension grille-masse permet facilement de contrôler la tension grille-source si la tension source-masse est relativement faible).

Avantageusement, le mode de réalisation met de plus en œuvre une évolution progressive du changement de configuration du sous-ensemble, notamment entre un mode tout parallèle et un mode tout série, par un changement progressif des différents interrupteurs. Cette évolution progressive peut être mise en œuvre par une des solutions suivantes :
- les valeurs de référence Refa, Refb et Refc des trois comparateurs 11, 21 sont identiques et la seule dispersion technologique des comparateurs, par exemple sur leur tension d'offset interne, suffit à obtenir leur commutation décalée ; ou
- les trois valeurs de référence sont choisies différentes, mais proches de la valeur consigne souhaitée, obtenue par le calcul I* Rshunt ; ou
- les valeurs de référence Refa, Refb et Refc des trois comparateurs 11, 21 sont identiques et trois comparateurs à hystérésis sont utilisés, dont les valeurs d'hystérésis diffèrent.

Dans le cas de la mise en série de plusieurs sous-ensembles tels que celui de la figure 14, il peut être avantageux dans certains cas de prendre en compte l'état du dispositif voisin pour établir les valeurs de référence. En effet, si on veut par exemple autoriser un courant global d'autant plus élevé que le nombre de LED en parallèle est élevé et inversement, il faut réduire rapidement les seuils de commutation dès qu'un seul des dispositifs commence à se positionner en mode série (présente moins de LED en parallèle) et remettre un seuil plus élevé dès que tous les dispositifs présentent un nombre de LED en parallèle plus élevé. En pratique, connaitre l'état d'un ou deux sous-ensembles voisins peut être suffisant, la progression parallèle/série s'effectuant alors de proche en proche.

La tension de référence est générée par un circuit non représenté sur les figures 14 et 15. Pour cela, un circuit existant permettant de générer une tension de référence de par exemple 0,4 V à partir d'une tension d'alimentation de 1,4V à 18V peut être choisi. A partir d'une certaine tension de référence, une autre référence peut être obtenue par exemple par l'intermédiaire d'un pont diviseur. En variante, cette tension de référence peut être obtenue par la simple tension de seuil d'une diode. Selon une autre variante, cette tension de référence peut être une tension de référence interne du comparateur. On peut en variante prévoir l'utilisation d'une tension proportionnelle à la tension d'alimentation redressée.

Selon une variante de réalisation, la tension de référence peut être générée et/ou ajustée à partir d'une commande externe, notamment par une commande d'un utilisateur qui souhaite modifier l'éclairage en vue de l'ajuster à sa convenance. La tension de référence peut être obtenue par la traduction en une valeur analogique, qui sert de référence, d'une trame radio récupérée par un module radio. Elle peut en variante être obtenue par une information transmise par courant porteur sur la ligne d'alimentation de l'éclairage. Selon une autre variante, un potentiomètre ou un codeur directement actionné par un utilisateur peut être implémenté. En variante, un bus de communication, éventuellement isolé galvaniquement, permet la transmission de cette information. Enfin, cette tension de référence pourrait être déduite d'une source d'information numérique, traduite sous forme de variation d'intensité lumineuse, par exemple pour réaliser une communication optique sans-fil (LiFi).

Selon un mode de réalisation, la référence de tension peut s'autolimiter, notamment en fonction de la température et plus particulièrement en cas de montée de la température, et/ou en fonction de présence d'une lumière extérieure.

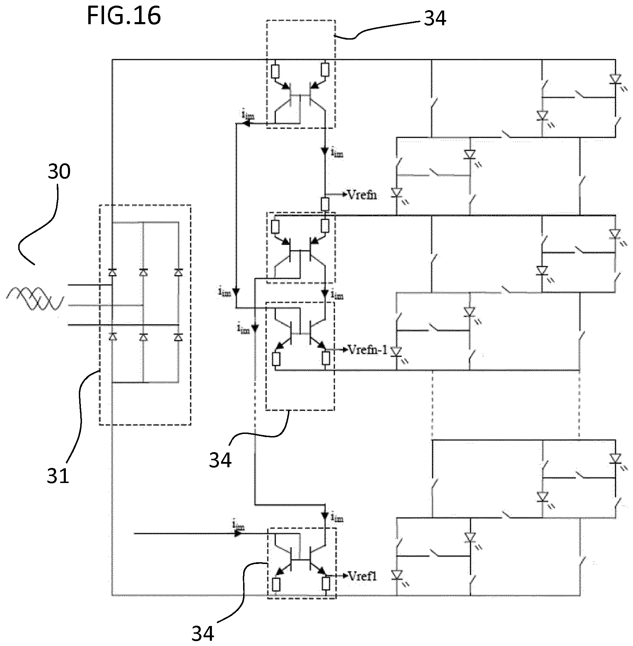

Dans tous les modes de réalisation, la gestion du dispositif d'éclairage ou d'affichage à LED peut être basée sur une consigne transmise sous forme d'un courant de consigne, utilisé ensuite pour la génération d'une tension de référence. La figure 16 représente un dispositif d'éclairage ou d'affichage à LED connecté au secteur 30, comprenant un circuit particulier pour la transmission des valeurs de tension de référence, à partir d'un courant de consigne iᵢₘ. Cette consigne globale est fournie par un utilisateur, soit directement, soit par l'intermédiaire d'une tension de consigne. En effet, ce circuit comprend une chaine de circuits de base 34 formant des circuits « miroir de courant », qui transmettent une sortie de courant iᵢₘ, égal au courant entrant. Dans cette réalisation, chaque miroir de courant comprend des transistors bipolaires avec résistance d'émetteur. En variante, des transistors MOS pourraient être utilisés. Pour mettre en œuvre une réalisation avec des tensions de référence Vrefi différentes pour chaque sous-ensemble i du dispositif, une solution consiste à choisir des résistances d'émetteur différentes ou d'utiliser des miroirs de courant imparfaits, pour obtenir des légères variations de courant, qui induisent des variations de tension de référence. En remarque, dans cette réalisation, la source d'alimentation est de type triphasée.

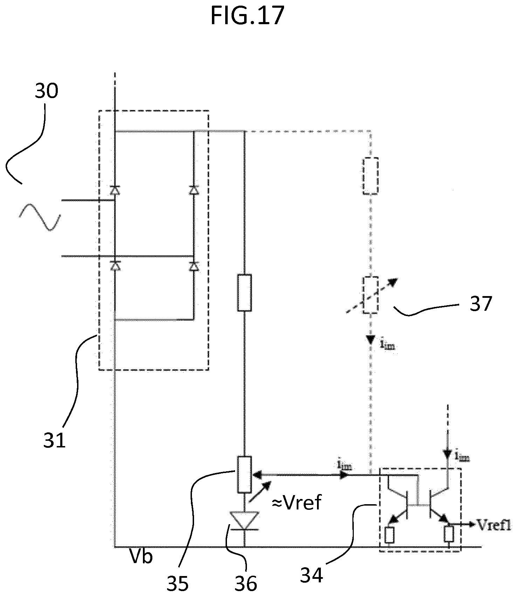

La figure 17 illustre une variante de réalisation qui permet d'ajuster la valeur du courant de consigne iᵢₘ. Cette solution récupère un courant en sortie du pont redresseur 31 et génère un courant de consigne iᵢₘ par un potentiomètre 35. Ce courant est transmis en entrée du premier circuit miroir de courant 34. Le reste du dispositif est identique à celui représenté par la figure 16 et n'est pas reproduit sur cette figure 17. En remarque, une diode 36 est disposée entre la borne inférieure de potentiel Vb du dispositif et le potentiomètre 35, pour compenser un décalage de tension par le circuit 34 de miroir de courant. La tension sous le potentiomètre 35 est ainsi proche de la tension de référence Vref1 du premier sous-ensemble du dispositif, qui correspond à une tension proportionnelle à la tension du secteur 30 redressé à laquelle on soustrait la tension de seuil de la diode 36, négligeable (environ 0,6 V). On peut donc considérer que cette réalisation permet d'obtenir une tension de référence proportionnelle à la tension redressée. En variante, une résistance 37 variable peut simplement être utilisée entre le pont redresseur 31 et le premier circuit 34 miroir de courant, comme représenté en trait tiré sur la figure 17.

De préférence, le courant de consigne iᵢₘ est choisi assez bas, notamment très inférieur au courant utilisé pour la fonction d'éclairage et/ou d'affichage, par exemple 100 fois inférieur, pour limiter la consommation énergétique liée à la fonction de transmission du courant de consigne.

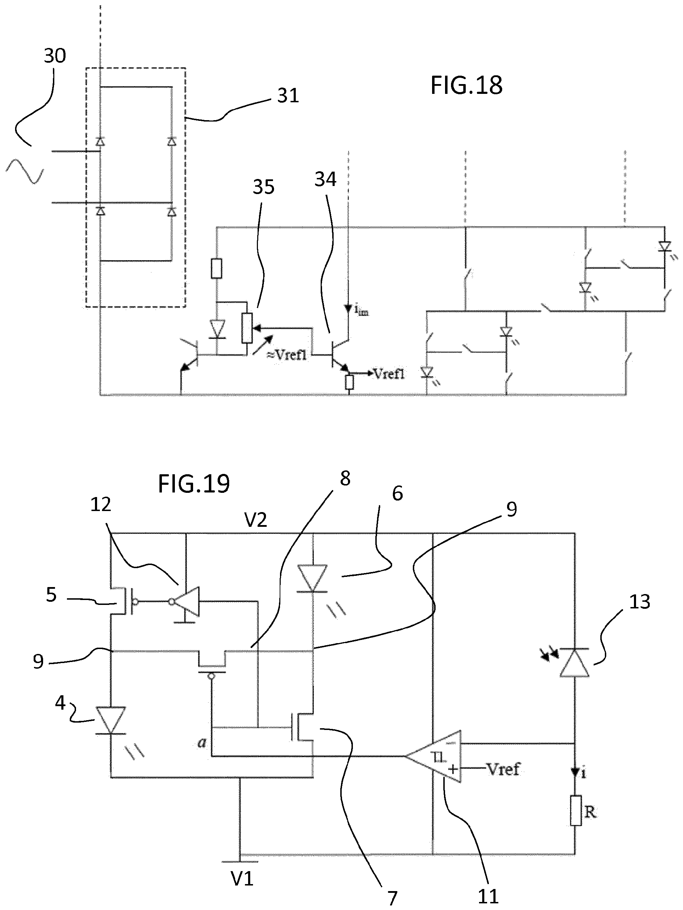

La figure 18 illustre un autre mode de réalisation pour générer un courant de consigne, dans lequel un décalage en tension est ajouté à partir de la tension de mise en conduction d'un transistor bipolaire.

La figure 19 illustre un module élémentaire selon l'architecture de la figure 1, mais en détaillant son circuit électrique permettant une commande avantageuse des interrupteurs 5, 7, et 8, qui sont de type transistors MOS (PMOS et/ou NMOS), avec une approche différente de la figure 13, puisque le pilotage des interrupteurs est mis en œuvre sur la base d'une intensité lumineuse. Le fonctionnement de ce circuit est très similaire à celui explicité en référence avec la figure 13, à partir d'un courant de commande généré par une photodiode 13 qui génère un courant i fonction de l'intensité lumineuse.

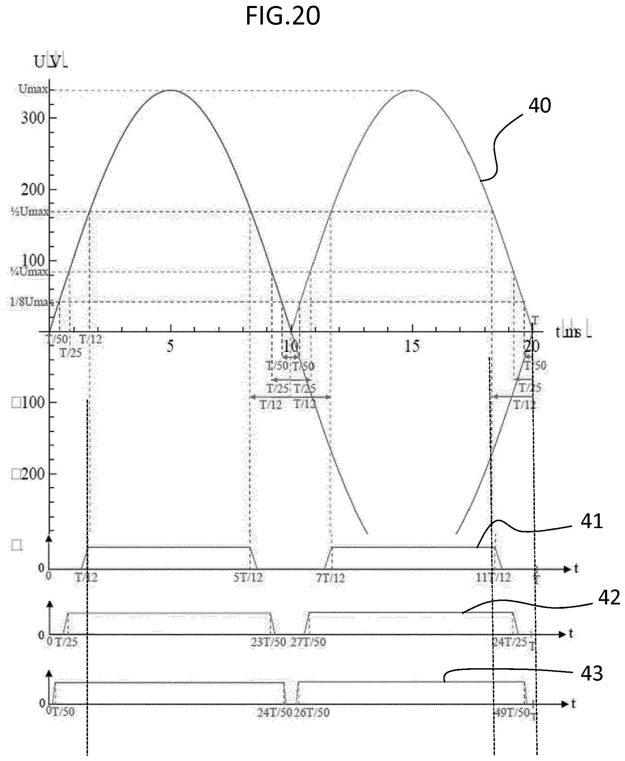

La figure 20 illustre la courbe 40 de variation de la tension en fonction du temps obtenue en sortie d'un pont redresseur 31 connecté au secteur 30, présentant une alimentation 50 Hz de 240 Veff. La courbe 41 illustre l'intensité lumineuse en fonction du temps obtenue par un dispositif d'éclairage comprenant plusieurs modules 1 élémentaires selon la figure 1 disposés en série, connecté à un tel pont redresseur 31. La courbe 42 illustre l'intensité lumineuse en fonction du temps obtenue par un dispositif d'éclairage connecté à un tel pont redresseur 31, comprenant plusieurs sous-ensembles en série, chaque sous-ensemble comprenant deux modules 1 élémentaires selon un assemblage représenté par la figure 6, dont la version simplifiée explicitée précédemment fait partie de l'invention. La courbe 43 illustre l'intensité lumineuse en fonction du temps obtenue par un dispositif d'éclairage connecté à un tel pont redresseur 31, comprenant plusieurs sous-ensembles en série, chaque sous-ensemble comprenant quatre modules 1 élémentaires selon un assemblage représenté par la figure 7. Dans tous les cas, le dispositif d'éclairage est dimensionné pour obtenir l'éclairage de toutes les LED lorsqu'elles sont en série et soumises à la tension crête Umax. Comme la tension de la source d'alimentation passe par une valeur nulle, il existe dans tous les cas des périodes durant lesquelles la tension d'alimentation est insuffisante pour éclairer les LED du dispositif d'éclairage et/ou d'affichage, même quand le dispositif s'adapte en disposant toutes ses LED en parallèle. Plus le dispositif comprend de modules pouvant être mis en série ou en parallèle, plus il peut pallier à cet inconvénient. Toutefois, on note par exemple que la courbe 41 indique un éclairage sur une durée représentant 67% du temps, la courbe 42 un éclairage sur une durée représentant 84% du temps et la courbe 43 un éclairage sur une durée représentant 92% du temps. Dans certains cas, ces interruptions de l'éclairage peuvent être perceptibles et inconfortables, peuvent générer un effet de type clignotement.

Pour pallier cet inconvénient, un mode de réalisation repose sur l'ajout d'un composant de stockage d'énergie en parallèle de tout ou partie des LED, au sein du dispositif. Un tel composant de stockage peut être disposé au niveau de chaque LED, ou d'un groupe de LED, et/ou au niveau d'un module élémentaire, ou d'un sous-ensemble de modules. De plus, un tel composant de stockage peut être de tout type, comme une batterie, une capacité, une super-capacité. L'utilisation d'une batterie peut, outre supprimer l'effet de clignotement, permettre le maintien de l'éclairage en cas de coupure d'alimentation.

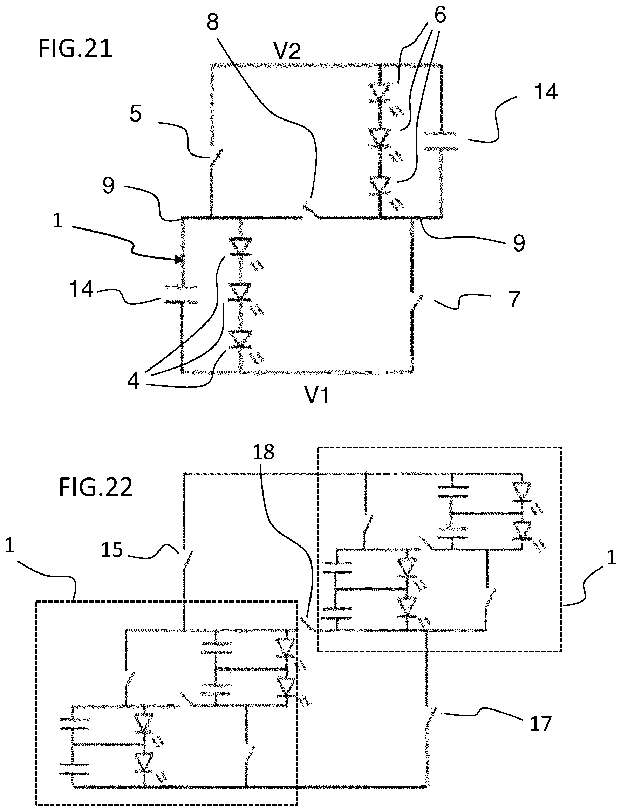

Ainsi, la figure 21 illustre un module 1 élémentaire selon un tel mode de réalisation. Ce module 1 élémentaire comprend aussi une architecture agencée entre deux bornes de liaison, de potentiels respectifs V1 et V2. De plus, il comprend deux branches parallèles et une liaison entre elles reliant leurs deux bornes intermédiaires 9, cette liaison comprenant un interrupteur intermédiaire 8. Chaque branche comprend un ensemble de trois LED 4, 6 agencées respectivement entre la borne inférieure de potentiel V1 et la borne intermédiaire et entre la borne intermédiaire la borne supérieure de potentiel V2. Un composant de stockage 14, sous forme d'une capacité, est disposé en parallèle de ces trois LED 4, 6 sur chaque branche parallèle. Au-delà de la borne intermédiaire 9, chaque branche parallèle comprend de plus un interrupteur parallèle 5, 7.

La figure 22 illustre un sous-ensemble comprenant deux modules 1 élémentaires liés entre eux par trois liaisons et trois interrupteurs 15, 17, 18, permettant leur liaison en série ou en parallèle, comme explicité en référence avec la figure 6, dont la version simplifiée avec une simple liaison série entre les deux modules 1 élémentaires, comme explicité précédemment, fait partie de l'invention. Dans ce mode de réalisation, chaque module élémentaire comprend deux LED et deux capacités, en parallèle des LED, sur chaque branche parallèle.

Dans tous les cas, les composants de stockage d'énergie se rechargent durant les périodes où la tension est suffisamment élevée, puis prennent le relais pour alimenter les LED lorsque la tension d'entrée n'est plus suffisante pour fournir le courant minimal nécessaire.

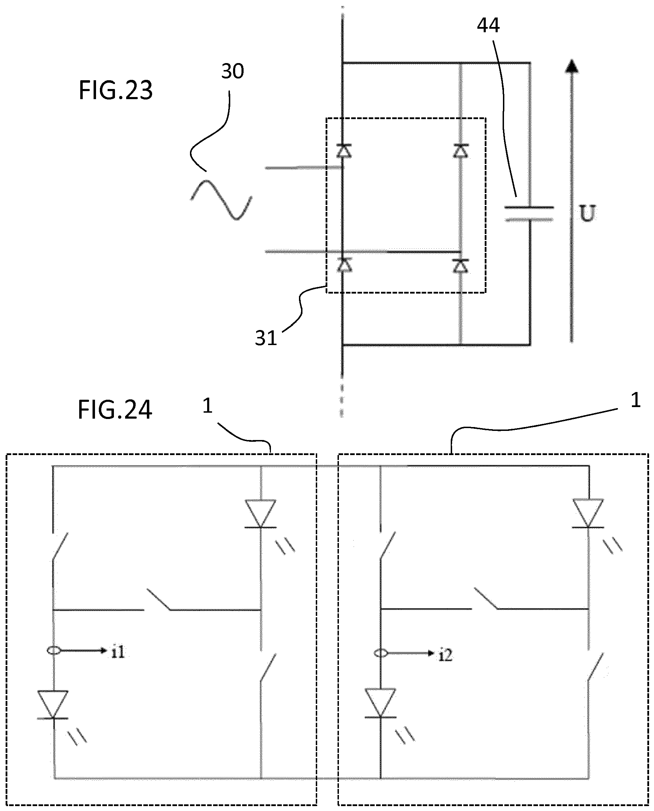

La figure 23 représente une approche alternative, dans laquelle un composant de stockage 44 est disposé en parallèle du pont redresseur 31. Ce composant de stockage, une capacité dans ce mode de réalisation, ralentit la chute de la tension d'alimentation des LED de sorte que cette tension ne descende jamais sous la tension minimale d'alimentation du dispositif d'éclairage et/ou d'affichage, garantissant ainsi un éclairage continu.

Les différents modes de réalisation ont montré l'avantage de l'architecture modulaire par la mise en série de plusieurs modules du dispositif d'éclairage. En effet, on identifie sur la figure 24 deux modules 1 élémentaires tels que représentés en figure 1, qui sont considérés comme un seul module élémentaire comprenant quatre branche parallèle, comprenant chacune une LED et un interrupteur série. Une telle approche pourrait par exemple être implémentée dans un afficheur, en utilisant une structure à trois modules parallèles comprenant chacun respectivement des LED rouges, bleues et vertes pour obtenir toutes les couleurs souhaitées. Le dispositif sera ensuite construit par l'assemblage en série de tels sous-ensembles.

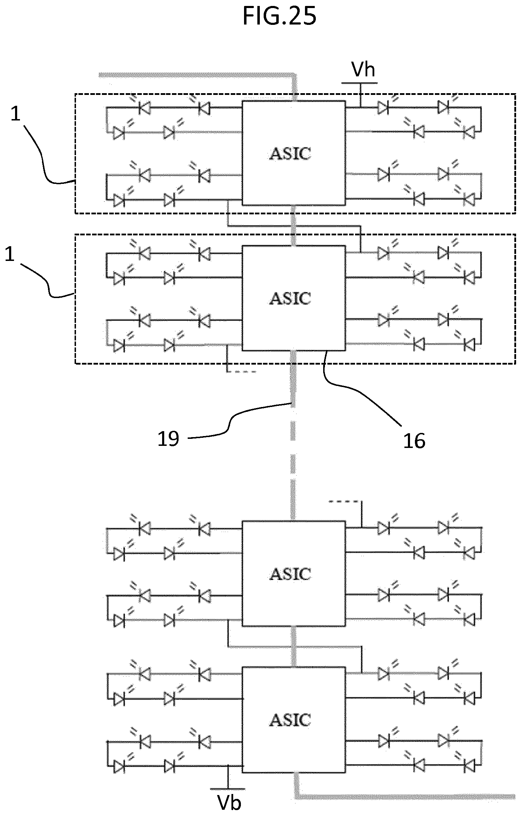

La figure 25 représente un dispositif d'éclairage et/ou d'affichage comprenant plusieurs modules 1 élémentaires connectés en série. Chaque module 1 comprend un circuit électronique 16 de type ASIC, intégrant toutes les fonctionnalités électroniques du module, notamment les interrupteurs et leurs éléments de commande. De manière optionnelle, les différents ASIC peuvent être reliés par une ligne de communication 19, par laquelle peut par exemple transiter une consigne pour la gestion du dispositif. En variante, un pont redresseur et/ou un pont en H peut être intégré dans chaque ASIC. Dans cette réalisation, chaque ASIC est soumis à une tension limitée, qui est la tension entre les deux bornes de son module.

L'invention porte aussi sur un procédé de gestion d'un dispositif d'éclairage et/ou d'affichage tel que décrit précédemment. Ce procédé comprend les étapes suivantes :
- détermination du nombre de LED à disposer en série et/ou en parallèle dans les modules et/ou sous-ensembles composant le dispositif ;
- détermination de la position des interrupteurs et transmission d'une commande d'ouverture ou fermeture des interrupteurs en fonction de la détermination précédente, cette commande étant générée par un circuit de commande desdits interrupteurs alimenté par une différence de potentiel basse tension correspondant à la différence de potentiel entre la borne inférieure et la borne supérieure du module comprenant les interrupteurs ou de la différence de potentiel entre une borne dudit module et une borne d'un module voisin.

Plus précisément, le procédé selon l'invention comprend une étape de détermination de la position des interrupteurs internes d'un module élémentaire pour disposer au moins deux composants d'éclairage élémentaires dudit module élémentaire en série ou en parallèle par les étapes suivantes :
- mesure d'au moins une grandeur au niveau dudit module élémentaire, comme le courant, une tension, la température, une intensité lumineuse ;
- transmission de ladite au moins une grandeur mesurée à au moins un calculateur ;
- détermination de la position desdits interrupteurs internes dudit module élémentaire en prenant en compte ladite au moins une grandeur mesurée, les au moins deux composants d'éclairage élémentaires dudit module élémentaire étant positionnés en série ou en parallèle par comparaison de la au moins une grandeur mesurée avec une valeur de référence,
- et comprend une étape d'alimentation électrique du circuit de commande desdits interrupteurs internes d'un module élémentaire à partir d'une différence de potentiel tension correspondant à la différence de potentiel entre la borne inférieure et la borne supérieure dudit module élémentaire ou à la différence de potentiel entre deux bornes de modules élémentaires voisins, un module élémentaire voisin étant soit un module élémentaire voisin inférieur dont la borne supérieure est reliée électriquement à la borne inférieure du module élémentaire soit un module élémentaire voisin supérieur dont la borne inférieure est reliée électriquement à la borne supérieure du module élémentaire considéré.

Selon le mode de réalisation, le procédé de gestion comprend les actionnements suivants des interrupteurs d'un module du dispositif :
- fermeture des interrupteurs disposés sur une branche verticale entre les bornes inférieure et supérieure d'un module du dispositif, et ouverture d'un interrupteur disposé sur une branche intermédiaire transversale reliant respectivement les bornes intermédiaires disposées entre la LED et un interrupteur de chacune des deux branches verticales, pour disposer les deux LED du module en parallèle, ou
- ouverture des interrupteurs disposés sur une branche verticale entre les bornes inférieure et supérieure d'un module du dispositif, et fermeture d'un interrupteur disposé sur une branche intermédiaire transversale reliant respectivement les bornes intermédiaires disposées entre la LED et un interrupteur de chacune des deux branches verticales, pour disposer les deux LED du module en série.

Avantageusement, le procédé de gestion du dispositif d'éclairage et/ou d'affichage selon un mode de réalisation comprend la mise en série de LED d'un module lorsque le courant d'alimentation dépasse un certain seuil, et une mise en parallèle de LED d'un module lorsque le courant d'alimentation est sous un certain seuil.

Comme décrit plus haut, le procédé de gestion du dispositif comprend les étapes suivantes :
- mesure d'au moins une grandeur au niveau d'un module du dispositif ;
- transmission de la grandeur mesurée à au moins un calculateur ;
- détermination de la position des interrupteurs du module en prenant en compte la grandeur mesurée.

Le dispositif d'éclairage ou d'affichage de l'invention peut être géré par une unité intelligente, un calculateur ou circuit de traitement local et/ou distant et accessible par un dispositif de communication local, ce calculateur pouvant comprendre tout élément logiciel (software) et/ou matériel (hardware) pour gérer le dispositif, notamment déterminer la configuration de ses interrupteurs. Pour cela, le dispositif peut intégrer tout moyen d'actionnement, tout circuit de commande de ses interrupteurs intégré au niveau d'un module et/ou de plusieurs modules voisins de sorte à avoir à ses bornes une différence de potentiel basse tension correspondant à la différence de potentiel entre la borne inférieure et la borne supérieure dudit module ou la différence de potentiel entre une borne dudit module et une borne d'un module voisin.

L'invention est particulièrement intéressante pour une connexion d'un dispositif d'éclairage ou d'affichage à LED sur le secteur électrique, ou à partir d'une source de tension variable, provenant par exemple d'un alternateur mis en mouvement à vitesse variable, comme à partir d'une mini-éolienne, ou à partir d'une dynamo de vélo, d'une lampe à manivelle, ou à partir d'un pack batterie dont la tension varie avec son état de charge, à partir de cellules solaires dont la tension dépend de l'ensoleillement. Elle présente aussi l'avantage de permettre le branchement d'un dispositif sur toute alimentation, le secteur de 240 Veff et 50Hz ou 120Veff et 60Hz comme une batterie de 12V ou 24V.

L'invention peut être appliquée à tout dispositif d'éclairage, ou d'affichage, ou de projection, à LED. Par diode électroluminescente (LED), nous incluons les différentes technologies, comme les diodes électroluminescentes organiques (OLED), les diodes électroluminescentes à polymère (PLED), les PHLED, etc. En variante qui ne fait pas partie de l'invention, il pourrait aussi convenir à un dispositif d'affichage comprenant de nombreuses ampoules basses tensions à incandescence classiques ou tout autre élément d'éclairage basse tension (notamment pour des tensions inférieures ou égales à 50V). Il convient donc à un assemblage de composants d'éclairage élémentaires basse tension, un tel composant d'éclairage élémentaire se présentant comme une entité physique autonome, comprenant une source lumineuse dans une enveloppe et des connecteurs pour sa liaison électrique, comme une ampoule, à incandescence ou LED.

Ainsi, elle est intéressante pour un phare d'un engin de transport, comme un vélo, une moto, une voiture, un bus, un train, un TRAM, un métro, etc. Elle peut aussi être implémentée pour un éclairage public, au sein d'un lampadaire, d'un abribus, d'une station de métro, etc. Elle peut être utile pour des lampes portables, comme une lampe de poche, une torche, un éclairage de tente, etc. Elle peut aussi permettre de fabriquer des lampes de décoration, pour faire des spots, un éclairage de jardin, de vitrine, d'indication, de palier, etc. Elle peut aussi être implémentée pour un phare en mer, un gyrophare de véhicule, pour un éclairage de sorties de secours, etc.

## Revendications

1. Dispositif d'éclairage et/ou d'affichage, comprenant plusieurs sous-ensembles, chaque sous-ensemble comprenant plusieurs modules (1) élémentaires, avec au moins un module élémentaire inférieur et un module élémentaire supérieur, ces plusieurs modules (1) élémentaires étant électriquement connectés entre eux en série entre ledit module élémentaire inférieur et ledit module élémentaire supérieur,
chaque module élémentaire comprenant :
- une borne inférieure (2) et une borne supérieure (3),
- au moins deux composants d'éclairage élémentaires qui sont des diodes électroluminescentes, formés d'au moins une première LED (4) et une deuxième LED (6), et plusieurs interrupteurs internes (5, 7, 8) agencés entre la borne inférieure (2) et la borne supérieure (3), lesdits plusieurs interrupteurs internes (5, 7, 8) respectifs comprenant un premier interrupteur (5), un deuxième interrupteur (7) et un interrupteur intermédiaire (8), une première branche s'étendant entre ses bornes inférieure (2) et supérieure (3) et comprenant dans l'ordre au moins la première LED (4) et le premier interrupteur (5), une seconde branche parallèle à la première branche entre ses bornes inférieure (2) et supérieure (3) comprenant dans l'ordre le deuxième interrupteur (7) et au moins la deuxième LED (6), et une branche intermédiaire comprenant l'interrupteur intermédiaire (8) et reliant respectivement les bornes intermédiaires (9) disposées entre la au moins une première LED (4) et le premier interrupteur (5) de la première branche et entre la au moins une deuxième LED (6) et le deuxième interrupteur (7) de la deuxième branche parallèle à la première branche, de sorte à pouvoir disposer la au moins une première LED (4) et la au moins une deuxième LED (6) en série ou en parallèle entre les deux bornes inférieure (2) et supérieure (3) et
- un circuit de commande (11, 12) desdits interrupteurs internes (5, 7, 8), disposé au sein du module élémentaire de manière adaptée pour être alimenté électriquement avec une tension d'alimentation à ses bornes correspondant à une différence de potentiel correspondant à la différence de potentiel (V2-V1) entre la borne inférieure (2) et la borne supérieure (3) dudit module élémentaire, ou à la différence de potentiel (V2'-V1) entre une borne supérieure (3) dudit module élémentaire et une borne inférieure d'un module élémentaire voisin, un module élémentaire voisin étant un module élémentaire voisin inférieur dont la borne supérieure est reliée électriquement à la borne inférieure (2) dudit module élémentaire considéré, ou à la différence de potentiel (V2'-V1) entre une borne inférieure (2) dudit module élémentaire et une borne supérieure d'un module élémentaire voisin, un module élémentaire voisin étant un module élémentaire voisin supérieur dont la borne inférieure est reliée électriquement à la borne supérieure (3) du module élémentaire considéré, le circuit de commande (11, 12) desdits interrupteurs internes (5, 7, 8) étant adapté à disposer la au moins une première LED (4) et la au moins une deuxième LED (6) soit en série entre les deux bornes inférieure (2) et supérieure (3), en fermant l'interrupteur intermédiaire (8) et en ouvrant le premier et deuxième interrupteur (5, 7), soit en parallèle entre les deux bornes inférieure (2) et supérieure (3), en ouvrant l'interrupteur intermédiaire (8) et en fermant le premier et deuxième interrupteur (5, 7), le dispositif comprenant en outre des interrupteurs supplémentaires (25, 27, 28) agencés sur trois branches de liaison entre deux desdits plusieurs sous-ensembles voisins du dispositif étant en liaison électrique entre eux par l'intermédiaire desdits interrupteurs supplémentaires, ces trois branches de liaison comprenant une première liaison électrique entre les bornes inférieures respectives des deux modules inférieurs respectifs desdits deux sous-ensembles sur laquelle un premier interrupteur (27) est positionné, une seconde liaison électrique entre les bornes supérieures respectives des deux modules supérieurs respectifs desdits deux sous-ensembles sur laquelle un second interrupteur (25) est positionné, et une troisième liaison électrique entre la borne supérieure du module inférieur d'un premier desdits deux sous-ensembles et la borne inférieure du module supérieur d'un deuxième desdits sous-ensembles, sur laquelle un troisième interrupteur (28) est positionné, pour permettre la liaison en série desdits deux sous-ensembles voisins en fermant le troisième interrupteur (28) et en ouvrant le premier et deuxième interrupteur (25, 27) ou en parallèle desdits deux sous-ensembles en ouvrant le troisième interrupteur (28) et en fermant le premier et deuxième interrupteur (25, 27).

2. Dispositif selon la revendication précédente, **caractérisé en ce que** chaque module (1) élémentaire comprend au moins un capteur de mesure (10) d'une grandeur caractéristique de l'état du module élémentaire considéré, comme le courant, l'intensité lumineuse générée, la tension, la température, et **en ce que** le circuit de commande (11, 12) du module élémentaire considéré est adapté pour commander les interrupteurs internes (5, 7, 8) respectifs en fonction de la grandeur caractéristique mesurée.

3. Dispositif selon l'une des revendications précédentes, **caractérisé en ce qu'**il comprend un circuit pour la transmission d'une consigne de courant à chaque module (1) élémentaire.

4. Dispositif selon l'une des revendications précédentes, **caractérisé en ce que**, pour chaque module élémentaire, le circuit de commande respectif comprend un comparateur (11) et une porte inverseuse (12).

5. Dispositif selon l'une des revendications précédentes, **caractérisé en ce que** au moins un module (1) élémentaire comprend au moins un composant de stockage (14) qui permet de restituer de l'énergie à au moins un des au moins deux composants d'éclairage élémentaires quand la tension d'alimentation du dispositif est insuffisante pour son éclairage.

6. Dispositif selon l'une des revendications précédentes, **caractérisé en ce qu'**il comprend un pont redresseur (31) ou plusieurs ponts redresseurs (32) associés chacun à un desdits plusieurs sous-ensembles pour redresser la tension d'alimentation du dispositif, et/ou **en ce qu'**il comprend un pont en H ou plusieurs ponts en H permettant de shunter au moins un module (1) élémentaire en cas de tension d'alimentation du dispositif insuffisante.

7. Dispositif selon l'une des revendications précédentes, **caractérisé en ce qu'**il comprend un ASIC pour chaque module (1) élémentaire.

8. Dispositif selon l'une des revendications précédentes, **caractérisé en ce que** lesdits interrupteurs internes (5, 7, 8) et lesdits interrupteurs supplémentaires (25, 27, 28) sont aptes à occuper une position semi-ouverte pour remplir une fonction de régulateur/limiteur de courant.

9. Dispositif selon l'une des revendications précédentes, **caractérisé en ce que** les interrupteurs internes (5, 7, 8) et les interrupteurs supplémentaires (25, 27, 28) sont des interrupteurs commandés, comme des transistors bipolaires ou des transistors MOS.

10. Procédé de gestion d'un dispositif selon l'une des revendications précédentes, **caractérisé en ce qu'**il comprend une étape de détermination de la position des interrupteurs internes (5, 7, 8) d'un module (1) élémentaire pour disposer la au moins une première LED (4) et la au moins une deuxième LED (6) dudit module élémentaire en série ou en parallèle par les étapes suivantes :
- mesure d'au moins une grandeur au niveau dudit module élémentaire, comme le courant, une tension, la température, une intensité lumineuse ;
- transmission de ladite au moins une grandeur mesurée à au moins un calculateur ;
- détermination de la position desdits interrupteurs internes (5, 7, 8) dudit module élémentaire en prenant en compte ladite au moins une grandeur mesurée, la au moins une première LED (4) et la au moins une deuxième LED (6) dudit module élémentaire étant positionnés en série ou en parallèle par comparaison de la au moins une grandeur mesurée avec une valeur de référence, et **en ce qu'**il comprend une étape d'alimentation électrique du circuit de commande desdits interrupteurs internes (5, 7, 8) d'un module (1) élémentaire à partir d'une différence de potentiel tension correspondant à la différence de potentiel (V2-V1) entre la borne inférieure (2) et la borne supérieure (3) dudit module élémentaire ou à la différence de potentiel (V2'-V1) entre une borne supérieure (3) dudit module élémentaire et une borne inférieure d'un module élémentaire voisin, un module élémentaire voisin étant un module élémentaire voisin inférieur dont la borne supérieure est reliée électriquement à la borne inférieure (2) dudit module élémentaire considéré, ou à la différence de potentiel (V2'-V1) entre une borne inférieure (2) dudit module élémentaire et une borne supérieure d'un module élémentaire voisin, un module élémentaire voisin étant un module élémentaire voisin supérieur dont la borne inférieure est reliée électriquement à la borne supérieure (3) dudit module élémentaire cosidéré.

11. Procédé de gestion d'un dispositif selon la revendication précédente, **caractérisé en ce qu'**il comprend une étape de régulation par hystérésis de la configuration des interrupteurs du dispositif.

## Patentansprüche

1. Beleuchtungs- und/oder Anzeigevorrichtung, umfassend mehrere Unteranordnungen, wobei jede Unteranordnung mehrere Elementarmodule (1) umfasst, mit wenigstens einem unteren Elementarmodul und einem oberen Elementarmodul, wobei diese mehreren Elementarmodule (1) zwischen dem unteren Elementarmodul und dem oberen Elementarmodul elektrisch miteinander in Reihe geschaltet sind, wobei jedes Elementarmodul Folgendes umfasst:
- einen unteren Anschluss (2) und einen oberen Anschluss (3),
- wenigstens zwei elementare Beleuchtungskomponenten, die Leuchtdioden sind, die von wenigstens einer ersten LED (4) und einer zweiten LED (6) gebildet sind, und mehrere interne Schalter (5, 7, 8), die zwischen dem unteren Anschluss (2) und dem oberen Anschluss (3) angeordnet sind, wobei die jeweiligen mehreren internen Schalter (5, 7, 8) einen ersten Schalter (5), einen zweiten Schalter (7) und einen Zwischenschalter (8) umfassen, einen ersten Zweig, der sich zwischen seinem unteren (2) und oberen Anschluss (3) erstreckt und in der Reihenfolge wenigstens die erste LED (4) und den ersten Schalter (5) umfasst, einen zweiten Zweig parallel zum ersten Zweig zwischen seinem unteren (2) und oberen Anschluss (3), der in der Reihenfolge den zweiten Schalter (7) und wenigstens die zweite LED (6) umfasst, und einen Zwischenzweig, der den Zwischenschalter (8) umfasst und jeweils die Zwischenanschlüsse (9), die zwischen der wenigstens einen ersten LED (4) und dem ersten Schalter (5) des ersten Zweigs und zwischen der wenigstens einen zweiten LED (6) und dem zweiten Schalter (7) des zweiten Zweigs, der parallel zum ersten Zweig verläuft, angeordnet sind, verbindet, um die wenigstens eine erste LED (4) und die wenigstens eine zweite LED (6) in Reihe oder parallel zwischen die zwei Anschlüssen, dem unteren (2) und oberen (3), anordnen zu können, und
- eine Steuerschaltung (11, 12) der internen Schalter (5, 7, 8), die innerhalb des Elementarmoduls in geeigneter Weise angeordnet ist, um an ihren Anschlüssen mit einer Versorgungsspannung elektrisch gespeist zu werden, die einer Potentialdifferenz entspricht, die der Potentialdifferenz (V2-V1) zwischen dem unteren Anschluss (2) und dem oberen Anschluss (3) des Elementarmoduls oder der Potentialdifferenz (V2'-V1) zwischen einem oberen Anschluss (3) des Elementarmoduls und einem unteren Anschluss eines benachbarten Elementarmoduls, wobei ein benachbartes Elementarmodul ein unteres benachbartes Elementarmodul ist, dessen oberer Anschluss mit dem unteren Anschluss (2) des betrachteten Elementarmoduls elektrisch verbunden ist, oder der Potentialdifferenz (V2'-V1) zwischen einem unteren Anschluss (2) des Elementarmoduls und einem oberen Anschluss eines benachbarten Elementarmoduls, wobei ein benachbartes Elementarmodul ein oberes benachbartes Elementarmodul ist, dessen unterer Anschluss mit dem oberen Anschluss (3) des betrachteten Elementarmoduls elektrisch verbunden ist, entspricht, wobei die Steuerschaltung (11, 12) der internen Schalter (5, 7, 8) geeignet ist, die wenigstens eine erste LED (4) und die wenigstens eine zweite LED (6) entweder durch Schließen des Zwischenschalters (8) und Öffnen des ersten und zweiten Schalters (5, 7) in Reihe zwischen den zwei Anschlüssen, dem unteren (2) und oberen (3), oder durch Öffnen des Zwischenschalters (8) und Schließen des ersten und zweiten Schalters (5, 7) parallel zwischen den zwei Anschlüssen, dem unteren (2) und oberen (3), anzuordnen, wobei die Vorrichtung ferner Zusatzschalter (25, 27, 28) umfasst, die auf drei Verbindungszweigen zwischen zwei der mehreren benachbarten Unteranordnungen der Vorrichtung angeordnet sind, die über die Zusatzschalter elektrisch miteinander in Verbindung stehen, wobei diese drei Verbindungszweige eine erste elektrische Verbindung zwischen den jeweiligen unteren Anschlüssen der zwei jeweiligen unteren Module der zwei Unteranordnungen, auf welcher ein erster Schalter (27) positioniert ist, eine zweite elektrische Verbindung zwischen den jeweiligen oberen Anschlüssen der zwei jeweiligen oberen Module der zwei Unteranordnungen, auf welcher ein zweiter Schalter (25) positioniert ist, und eine dritte elektrische Verbindung zwischen dem oberen Anschluss des unteren Moduls einer ersten der zwei Unteranordnungen und dem unteren Anschluss des oberen Moduls einer zweiten der Unteranordnungen, auf welcher ein dritter Schalter (28) positioniert ist, umfasst, um die Reihenschaltung der zwei benachbarten Unteranordnungen durch Schließen des dritten Schalters (28) und durch Öffnen des ersten und zweiten Schalters (25, 27) oder Parallelschaltung der zwei Unteranordnungen durch Öffnen des dritten Schalters (28) und durch Schließen des ersten und zweiten Schalters (25, 27) zu gestatten.

2. Vorrichtung nach dem vorhergehenden Anspruch, **dadurch gekennzeichnet, dass** jedes Elementarmodul (1) wenigstens einen Sensor zur Messung (10) einer charakteristischen Größe des Zustands des betrachteten Elementarmoduls umfasst, wie den Strom, die erzeugte Lichtstärke, die Spannung, die Temperatur, und dadurch, dass die Steuerschaltung (11, 12) des betrachteten Elementarmoduls geeignet ist, die jeweiligen internen Schalter (5, 7, 8) in Abhängigkeit von der gemessenen charakteristischen Größe zu steuern.

3. Vorrichtung nach einem der vorhergehenden Ansprüche, **dadurch gekennzeichnet, dass** sie eine Schaltung für die Übertragung einer Stromvorgabe an jedes Elementarmodul (1) umfasst.

4. Vorrichtung nach einem der vorhergehenden Ansprüche, **dadurch gekennzeichnet, dass** für jedes Elementarmodul die jeweilige Steuerschaltung einen Komparator (11) und ein Invertiergatter (12) umfasst.

5. Vorrichtung nach einem der vorhergehenden Ansprüche, **dadurch gekennzeichnet, dass** wenigstens ein Elementarmodul (1) wenigstens eine Speicherungskomponente (14) umfasst, die es gestattet, Energie an wenigstens eine der wenigstens zwei elementaren Beleuchtungskomponenten abzugeben, wenn die Versorgungsspannung der Vorrichtung für deren Beleuchtung nicht ausreichend ist.

6. Vorrichtung nach einem der vorhergehenden Ansprüche, **dadurch gekennzeichnet, dass** sie eine Gleichrichterbrücke (31) oder mehrere Gleichrichterbrücken (32) umfasst, die jeweils einer der mehreren Unteranordnungen zugeordnet sind, um die Versorgungsspannung der Vorrichtung gleichzurichten, und/oder dadurch, dass sie eine H-Brücke oder mehrere H-Brücken umfasst, die es gestatten, bei nicht ausreichender Versorgungsspannung der Vorrichtung wenigstens ein Elementarmodul (1) zu shunten.

7. Vorrichtung nach einem der vorhergehenden Ansprüche, **dadurch gekennzeichnet, dass** sie eine ASIC für jedes Elementarmodul (1) umfasst.

8. Vorrichtung nach einem der vorhergehenden Ansprüche, **dadurch gekennzeichnet, dass** die internen Schalter (5, 7, 8) und die Zusatzschalter (25, 27, 28) geeignet sind, eine halboffene Position einzunehmen, um eine Stromregler/-begrenzerfunktion wahrzunehmen.

9. Vorrichtung nach einem der vorhergehenden Ansprüche, **dadurch gekennzeichnet, dass** die internen Schalter (5, 7, 8) und die Zusatzschalter (25, 27, 28) gesteuerte Schalter wie Bipolartransistoren oder MOS-Transistoren sind.

10. Verfahren zur Verwaltung einer Vorrichtung nach einem der vorhergehenden Ansprüche, **dadurch gekennzeichnet, dass** es einen Schritt des Bestimmens der Position der internen Schalter (5, 7, 8) eines Elementarmoduls (1) umfasst, um die wenigstens eine erste LED (4) und die wenigstens eine zweite LED (6) des Elementarmoduls durch die folgenden Schritte in Reihe oder parallel anzuordnen:
- Messen wenigstens einer Größe am Elementarmodul, wie den Strom, eine Spannung, die Temperatur, eine Lichtstärke;
- Übertragen der wenigstens einen gemessenen Größe an mindestens einen Rechner;
- Bestimmen der Position der internen Schalter (5, 7, 8) des Elementarmoduls unter Berücksichtigung der wenigstens einen gemessenen Größe, wobei die wenigstens eine erste LED (4) und die wenigstens eine zweite LED (6) des Elementarmoduls durch Vergleich der wenigstens einen gemessenen Größe mit einem Referenzwert in Reihe oder parallel positioniert werden,
und dadurch, dass es einen Schritt des elektrischen Speisens der Steuerschaltung der internen Schalter (5, 7, 8) eines Elementarmoduls (1) aus einer Spannungspotentialdifferenz umfasst, die der Potentialdifferenz (V2-V1) zwischen dem unteren Anschluss (2) und dem oberen Anschluss (3) des Elementarmoduls oder der Potentialdifferenz (V2'-V1) zwischen einem oberen Anschluss (3) des Elementarmoduls und einem unteren Anschluss eines benachbarten Elementarmoduls, wobei ein benachbartes Elementarmodul ein unteres benachbartes Elementarmodul ist, dessen oberer Anschluss mit dem unteren Anschluss (2) des betrachteten Elementarmoduls elektrisch verbunden ist, oder der Potentialdifferenz (V2'-V1) zwischen einem unteren Anschluss (2) des Elementarmoduls und einem oberen Anschluss eines benachbarten Elementarmoduls, wobei ein benachbartes Elementarmodul ein oberes benachbartes Elementarmodul ist, dessen unterer Anschluss mit dem oberen Anschluss (3) des betrachteten Elementarmoduls elektrisch verbunden ist, entspricht.

11. Verfahren zur Verwaltung einer Vorrichtung nach dem vorhergehenden Anspruch, **dadurch gekennzeichnet, dass** es einen Schritt des Regelns der Konfiguration der Schalter der Vorrichtung durch Hysterese umfasst.

## Claims

1. Lighting and/or display device, comprising a plurality of subassemblies, each subassembly comprising a plurality of individual modules (1), including at least a lower individual module and an upper individual module, said plurality of individual modules (1) being electrically connected together in series between said lower individual module and said upper individual module,
each individual module comprising :
- a lower terminal (2) and upper terminal (3),
- at least two individual lighting components which are light-emitting diodes, formed of at least one first LED (4) and one second LED (6), and a plurality of internal switches (5, 7, 8) arranged between the lower terminal (2) and the upper terminal (3), said plurality of internal switches (5, 7, 8) respectively comprise a first switch (5), a second switch (7) and an intermediate switch (8), a first branch extending between its lower (2) and upper (3) terminals and comprising, in order, at least the first LED (4) and the first switch (5), a second branch parallel to the first branch between its lower (2) and upper (3) terminals comprising, in order, the second switch (7) and at least the second LED (6), and an intermediate branch comprising the intermediate switch (8) and linking respectively the intermediate terminals (9) arranged between the at least one first LED (4) and the first switch (5) of the first branch and between the at least one second LED (6) and the second switch (7) of the second branch parallel to the first branch, so as to be able to arrange the at least one first LED (4) and the at least one second LED (6) in series or in parallel between the two lower (2) and upper (3) terminals, and
- a control circuit (11, 12) for said internal switches (5, 7, 8) arranged within the individual module in a way adapted to be electrically powered with a power supply voltage at its terminals corresponding to a potential difference (V2-V1) between the lower terminal (2) and the upper terminal (3) of said individual module, or to the potential difference (V2'-V1) between an upper terminal (3) of said individual module and a lower terminal of a neighbouring individual module, a neighbouring individual module being a lower neighbouring individual module whose upper terminal is electrically connected to the lower terminal (2) of said considered individual module, or to the potential difference (V2'-V1) between a lower terminal (2) of said individual module and an upper terminal of a neighbouring individual module, a neighbouring individual module being a upper neighbouring individual module whose lower terminal is electrically connected to the upper terminal (3) of said considered individual module,,
the control circuit (11, 12) for said internal switches (5, 7, 8) being adapted to arrange the at least one first LED (4) and the at least one second LED (6) in series between the two lower (2) and upper (3) terminals, by closing the intermediate switch (8) and by opening the first and second switch (5, 7), or in parallel between the two lower (2) and upper (3) terminals, by opening the intermediate switch (8) and by closing the first and second switch (5, 7),
the device also comprising additional switches (25, 27, 28) arranged on three link branches between two of said plurality of neighbouring subassemblies of the device, being electrically connected together through said additional switches, said three link branches comprising a first branch extending between the respective lower terminals of the two respective lower modules of said two subassemblies on which a first switch (27) is arranged, a second electrical link between the respective upper terminals of the two respective upper modules of said two subassemblies on which a second switch (25) is arranged, and a third electrical link between the upper terminal of the lower module of a first of said two subassemblies and the lower terminal of the upper module of a second of said two subassemblies on which a third switch (28) is arranged, to allow the two neighbouring subassemblies to be linked in series by closing the third switch (28) and by opening the first and second switch (25, 27) or in parallel by opening the third switch (28) and by closing the first and second switch (25, 27).

2. Device according to the preceding claim, **characterized in that** the each individual module (1) comprises at least one sensor (10) for measuring a quantity characteristic of the state of the considered individual module, such as the current, the light intensity generated, the voltage, or the temperature, and **in that** the control circuit (11, 12) of the considered individual module is adapted to control the internal switches (5, 7, 8)according to the measured characteristic quantity.

3. Device according to one of the preceding claims, **characterized in that** it comprises a circuit for the transmission of a current setpoint to each individual module (1).

4. Device according to one of the preceding claims, **characterized in that**, for each individual module, the control circuit comprises a comparator (11) and an inverting gate (12).

5. Device according to one of the preceding claims, **characterized in that** at least one individual module (1) comprises at least one storage component (14) which makes it possible to restore energy to at least one of the at least two individual lighting components when the power supply voltage of the device is insufficient for its lighting.

6. Device according to one of the preceding claims, **characterized in that** it comprises a rectifier bridge (31) or a plurality of rectifier bridges (32) each associated with one of said plurality of subassemblies to rectify the power supply voltage of the device, and/or **in that** it comprises one or more H-configuration bridges making it possible to shunt at least one individual module (1) in case of insufficient power supply voltage.

7. Device according to one of the preceding claims, **characterized in that** it comprises an ASIC for each individual module (1).

8. Device according to one of the preceding claims, **characterized in that** said internal switches (5, 7, 8) and said additional switches (25, 27, 28) are suitable for occupying a semi-open position to fulfil a current regulating/limiting function.

9. Device according to one of the preceding claims, **characterized in that** the internal switches (5, 7, 8) and the additional switches (25, 27, 28) are controlled switches, such as bipolar transistors or MOS transistors.

10. Method for managing a device according to one of the preceding claims, **characterized in that** it comprises a step of determination of the position of the internal switches (5, 7, 8) of an individual module (1) to arrange the at least one first LED (4) and the at least one second LED (6) of said individual module in series or in parallel with the following steps :
- measurement of at least one quantity at the level of said individual module, such as the current, a voltage, the temperature, or a light intensity;
- transmission of said measured quantity to at least one computer;
- determination of the position of said internal switches (5, 7, 8) of said individual module by taking into account said measured quantity, the at least one first LED (4) and the at least one second LED (6) of said individual module being arranged in series or in parallel by comparing said measured quantity with a reference value,
and **in that** it comprises
a step of electrically powering a control circuit for said internal switches (5, 7, 8) of an individual module (1) from a low-voltage potential difference corresponding to the potential difference (V2-V1) between the lower terminal (2) and the upper terminal (3) of said individual module or to the potential difference (V2'-V1) between an upper terminal (3) of said individual module and a lower terminal of a neighbouring individual module, a neighbouring individual module being a lower neighbouring individual module whose upper terminal is electrically connected to the lower terminal (2) of said considered individual module, or to the potential difference (V2'-V1) between a lower terminal (2) of said individual module and an upper terminal of a neighbouring individual module, a neighbouring individual module being an upper neighbouring individual module whose lower terminal is electrically connected to the upper terminal (3) of said considered individual module.

11. Method for managing a device according to the preceding claim, **characterized in that** it comprises a step of regulation, by hysteresis, of the configuration of the device switches.
